Europäisches Patentamt

(19) European Patent Office

Office européen des brevets

(11) Publication number: **0 255 308**
**A1**

## (12) EUROPEAN PATENT APPLICATION

(21) Application number: **87306588.2**

(22) Date of filing: **24.07.87**

(51)· Int. Cl.⁴: **A47J 36/28**

(30) Priority: **25.07.86 GB 8618263**

(43) Date of publication of application:
**03.02.88 Bulletin 88/05**

(84) Designated Contracting States:
**BE ES GB**

(71) Applicant: **Celestic Limited**
**Norfolk Lane**
**Cleethorpes South Humberside DN35**
**8BB(GB)**

(72) Inventor: **Stephenson, Maurice**
**'Elm House Farm' Crosby**
**Maryport Cumbria England(GB)**

(74) Representative: **Pattullo, Norman et al**
**Ian G. Murgitroyd and Company Mitchell**
**House 333 Bath Street**
**Glasgow G2 4ER Scotland(GB)**

(54) **Self-heating container assembly.**

(57) Self heating food cans of the type using a water and lime mixture as the heating medium usually have to be provided with some form of insulation so that the container can be handled. A self heating container assembly comprises a self heating container (2) which is circular in cross-section. This container (2) is mounted within an outer box (10) which is square in cross-section. Thus a series of chambers (11) are formed around the circumference of the container (2) which provide insulation for the container (2) and also can be used for a packet of utensils (14).

Fig 3

EP 0 255 308 A1

## Self-Heating Container Assembly

This invention relates to a self-heating container assembly.

Self-heating containers are well known, typical examples being shown in United States Patent Specification 2 289 007 and European Patent Application 0 082 834 A. Containers of this kind fall into two main types, those in which there is an inner axially extending can containing the contents to be heated with a surrounding container, the materials which are to create the heating effect being arranged around the axially extending wall of the inner container and sometimes beneath it. The other type usually consist of a food container of shorter axial dimensions and with the heating materials arranged below it in a bottom space between the food container and the outer container. The present invention can be used with both types of construction.

It will be appreciated that the heat created by the mixed chemicals not only acts inwardly or upwardly to heat the food container but also outwardly thus heating the outer wall and/or bottom of the outer container and it is usually necessary to provide some form of insulation around the outer container, for example as shown in European Application 0 082 834 A in which thermal insulating material is used, for example of expanded polystyrene. The present invention is intended to provide a container assembly in which an easier form of insulation is employed and which, due to its configuration, provides other advantages.

According to the present invention there is provided a self-heating container assembly comprising a container having self heating means and located in an outer box whose cross sectional plan is of a different configuration to the cross-sectional plan of the container such that irregularly shaped chambers are provided spaced apart between the outer surface of the container and the inner surface of the outer box.

Thus, the cross-section of the self heating container could be substantially circular and the cross-section of the outer box substantially square thus creating four irregular shaped chambers at the corners of the box.

The chambers may intercommunicate.

A somewhat similar set of irregular chambers is also created if the cross-section of the self-heating container is substantially oval and the cross-section of the box is substantially rectangular.

Yet again, if the self-heating container has a substantially rectangular or square cross-section then the cross-section of the box could be circular or oval to provide spaced apart chambers of irregular shape. It will be appreciated that many shapes of self-heating container and outer box can be employed but the preferred arrangement is with the outer box of a square or rectangular cross-section.

It has been found that the heat generated in the self-heating container assembly when it is operated is dissipated in the chambers so that the outer box enables the self-heating container to be handled manually without discomfort.

Thus, the expensive outer insulation normally provided on such self-heating containers can be substanially reduced or completely dispensed with.

A device for operating the self-heating container and/or an eating utensil can be conveniently provided in one of the chambers.

The box preferably includes an end cover adapted for removal prior to operation of the self-heating container and this end cover can act to retain the device and/or eating utensil referred to above.

The outer box can be made from many materials, for example a thin plastics material but is preferably made from a fibrous material which can, for example, be cardboard, this acting quite efficiently to provide an assembly which can be handled manually when in operation.

The invention can be performed in many ways but one embodiment will now be described by way of example and with reference to the accompanying drawings in which:

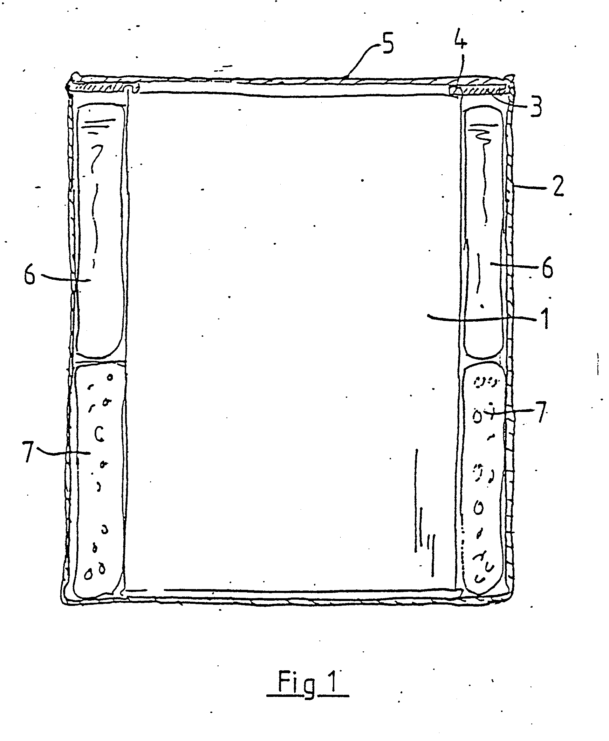

Fig. 1 is a diagrammatic cross-section through a cylindrical self-heating container;

Fig. 2 is a plan view of a self-heating container assembly with the upper outer cover removed;

Fig. 3 is an isometric view of the assembly of Fig. 2 and

Fig. 4 is a side view of a utensils packet for use with the assembly of Fig. 2

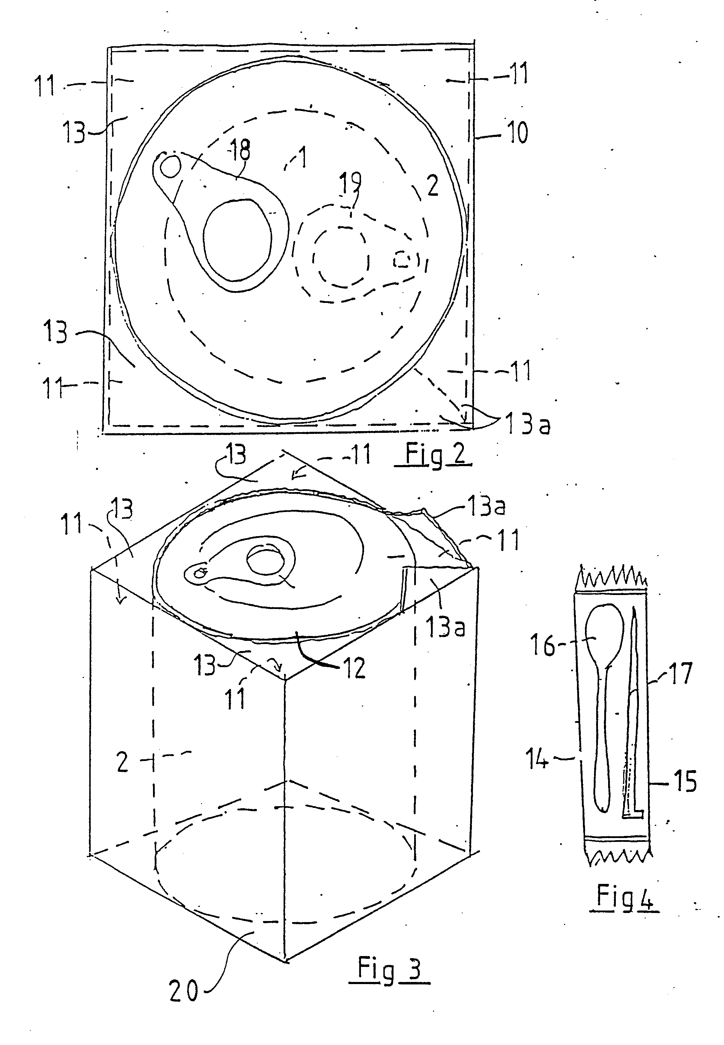

Referring to the drawings, a self-heating container for use in the invention comprises an inner can 1 of the ring pull type containing food to be heated, for example soup. The can is located within an outer metal container 2 by means of a plastic ring 3 which locates on the upper bead 4 of the inner container and beneath a pressed in top 5 to the outer container. This pressed in top is also provided with a ring pull 18 (as shown in Figure 2) so that the top 5 can be removed to reveal the plastic ring 3.

Located in the annular space surrounding the can 1 are plastic pouches, the upper pouch 6 containing water and the lower pouch 7 containing granules of lime.

The annular band 3 is provided with weakened portions (not shown) so that in order to operate the self-heating container it is merely necessary to remove the top 5 by the ring pull 18, and insert a spike 17, as shown in Figure 4, downwardly through the weakened portions of the ring 3 so that the spike perforates the water pouch 6 and the pouch 7 containing the granules. The exo-thermic reaction which then takes place heats the food in the can 1 which can then be opened by the ring pull 19 (shown in Figure 2) and the contents poured out or consumed direct from the can. If desired the lime granules can be contained free in the can rather than in a plastics material pouch 7.

As shown in Fig. 2 a cylindrical can 1 and outer container 2 are located in a box 10 which is of square cross-section. The box is made from a cardboard material and it will be seen that its flat sides touch or are close to the circular outer circumference of the container 2 so that four irregularly shaped air chambers 11 are formed around the circumference of the container. The container rests on the flat bottom 20 of the box 10 and the upper end of the box is provided with a removable end cover, not illustrated, which can be formed as a perforated disc to assist in removal. Removal of the cover reveals a circular opening 12 at the top of the box, with gussetted corners 13 remaining in position. One of the gussetted corners 13 is also perforated so that it can be opened, this corner being indicated by reference numeral 13a. Located in the air chamber 11 beneath this corner is a packet of utensils indicated by reference numeral 14. The packet which is in the form of a plastics material container 15 carries a spoon 16 and a spike 17. A paper napkin can also be included.

In order to operate the self-heating container it is merely necessary to remove the perforated portion of the end cover and then open the corner 13a and remove the packet 14. The ring pull 18 is used to remove the end cover 5 of the outer container and the spike 17 is then utilised to perforate the water pouch to enable the exo-thermic reaction to take place. When the action has been completed or at any convenient time the ring pull 19 on the can 1 is used to open the can and the contents can be either poured from it or eaten directly therefrom with the spoon 16.

It has been found that the outer box 10 can be made from any convenient material, for example a thin plastics material, but is preferably made from cardboard which provides quite sufficient insulation to enable the assembly to be handled without difficulty, the air chambers apparently acting as sufficient insulation.

If desired and if a particularly hot exo-thermic reaction was to be used then a thin layer of insulation could be applied to the outer container but, as mentioned above, it has been found that this is usually unnecessary.

The invention therefore provides a construction which has numerous advantages. The cost of providing the insulation is considerably reduced and the square box 10 as provided is easy to stack in any direction. Moreover, the air chambers 11 can be utilised to carry utensils for operating the assembly without recourse to fastening such utensils to the outside of the self-heating container.

In the construction described above the self-heating container is of substantially cylindrical construction with a circular outer circumference but it will be appreciated that the invention can also be used with containers of many other shapes, for example with an oval container and a rectangular outer box. Non circular outer boxes have particular advantage in as much that they are easy to stack and handle and are less likly to suffer from crushing when stacked.

Modifications and improvements may be incorporated without departing from the scope of the invention.

## Claims

1. A self-heating container assembly comprising a container having self heating means and located in an outer box whose cross sectional plan is of a different configuration to the cross-sectional plan of the container such that irregularly shaped chambers are provided spaced apart between the outer surface of the container and the inner surface of the outer box.

2. A self-heating container assembly as claimed in Claim 1, wherein the container has a substantially circular cross-section and the outer box has a substantially square cross-section.

3. A self-heating container assembly as claimed in Claim 1, wherein the container has a substantially oval cross-section and the outer box has a substantially rectangular cross-section.

4. A self-heating container assembly as claimed in Claim 1, wherein the container has a substantially square or rectangular cross-section and the outer box has a substantially circular or oval cross-section.

5. A self-heating container assembly as claimed in any one of the preceding Claims, wherein a device for operating the self heating means and/or an eating utensil are provided in one of the chambers.

6. A self-heating container assembly as claimed in any one of the preceding Claims, wherein the outer box includes an end cover adapted for removal prior to operation of the container.

7. A self-heating container assembly as claimed in any one of the preceding Claims, wherein the outer box comprises a thin plastics or fibrous material.

8. A self-heating container assembly as claimed in any one of the preceding Claims, wherein the self heating means comprises water and lime.

9. A self-heating container assembly as claimed in any one of the preceding Claims, wherein insulation is provided on the outer surface of the container.

Fig 1

11 —

11 — 11

13 —

— 10

18    1

19    2

13 —

11 —

13 — — 11

— 13a

13 — — 11    _Fig 2_

13 — — 11

13    13a

11 — 13    — 11

13    13a

13    12

11

2

16 —

17

14 —

15

20    _Fig 3_

_Fig 4_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 384 720  (BABCOCK et al.)<br>* Whole document * | 1 | A 47 J   36/28 |
| A,D | EP-A-0 082 834  (APELLANIZ)<br>* Whole document * | 1,7-9 | |
| A | DE-A-3 126 518  (FÜRST)<br>* Figures 3,4 * | 5 | |
| A | EP-A-0 180 375  (HOTCAN LTD)<br><br>* Whole document * | | |

TECHNICAL FIELDS
SEARCHED (Int. Cl.4)

A 47 J
F 25 D
F 24 J

The present search report has been drawn up for all claims

| Place of search | Date of completion of the search | Examiner |
|---|---|---|
| THE HAGUE | 20-10-1987 | GAIC P.M.Z. |